# EUROPEAN PATENT APPLICATION

(11) **EP 0 574 170 A1**
(43) Date of publication of application: **15.12.1993**
(21) Application number: 93304184.0
(22) Date of filing: 28.05.1993
(51) Int. Cl.: G01J 3/453, G02B 7/182

(54) **Unitary mirror and mirror system for infrared spectrometers and the like**

(30) Priority: 11.06.1992 US 897355
(71) Applicant: NICOLET INSTRUMENT CORPORATION, Madison, WI 53711-4495 (US)
(72) Inventor: Miller, Robert A., Monona, WI 53715 (US); Meyers, Martin E., Madison, WI 53705 (US); Strait, David R., Madison, WI 53711 (US); Ressler, Gregg, Madison, WI 53711 (US); Skupniewicz, George L., Madison, WI 53711 (US)
(74) Representative: Senior, Alan Murray

(57) **Abstract**

A mirror system for infrared spectrometers and the like includes a baseplate having a flat top surface which defines a reference plane, with reference locators, such as holes, in the baseplate defining the desired positions of the intersections of the center lines of the beam paths above the baseplate. Alignment locator holes are also formed in the baseplate. Mirrors are formed of a unitary mirror body in which a mirror surface -- flat, concave, or convex -- is formed such as by diamond turning. Each of the mirrors has a reference locator on its bottom surface which lies directly underneath the surface vertex of the concave or convex mirror surface or beneath the center of the plane of a flat mirror. Each mirror also has an alignment locator on its bottom surface spaced away from the reference locator. The reference locator and alignment locator may comprise pins which extend from the bottom surface of the mirrors. The mirrors are mounted to the baseplate by engaging the pins on the bottom surface of the mirrors with the corresponding reference locator and alignment locator holes in the baseplate. When the mirrors are mounted to the baseplate in this manner, all of the mirrors are properly aligned without further adjustment, thereby determining all of the beampaths and the focal points of the beams in the optical system.

## Description

### FIELD OF THE INVENTION

This invention pertains generally to the field of optics and optical systems, and particularly to the mirrors and the system of mirrors used in devices such as infrared spectrometers.

### BACKGROUND OF THE INVENTION

In an infrared spectrometer, mirrors are used to direct the infrared beam provided from an infrared source along a path which passes through an interferometer, the sample to be tested, and then to a detector. The mirrors used in such spectrometers include focusing mirrors (e.g., parabolic, elliptical, spherical, hyperbolic, and aspherical), used to transfer images from one position to another along an axis at a desired magnification, and flat mirrors which are used to change the direction of a beam. The figure accuracy of the mirror and the location of the mirror are important to properly focus, collimate, or refocus the infrared beam through all of the parts of the spectrometer.

In a conventional infrared spectrometer, electroformed metal or glass substrate mirrors are typically used. These mirrors have inherent inaccuracies. To compensate for these inaccuracies, the mirrors are typically glued to a slotted plate which is attached to a second plate and mounted on an angle plate casting with a screw and a stiff spring, with three adjustment screws usually provided to allow adjustment of the orientation of the mirror. These adjustment screws are adjusted by a technician to refocus the beam to the proper orientation and focal length. The base on which the mirror is mounted usually has oversize clearance holes which are used to attach the base to a chassis for rough positioning prior to the final fine adjustment of the mirror.

The conventional mirror mounting systems used in spectrometers have several disadvantages and limitations. First, significant time is required to manufacture and test the mirrors. For example, metal mirrors glued to a substrate require careful assembly and gluing of the mirror and accurate forming of the mirror to its proper shape, with subsequent assembly of plates, mirrors, springs, screws and so forth required to complete the mounting structure. The assembled mirror must then be aligned in the instrument by a technician and tested. Once the spectrometer is installed at the site of user, if the user adjusts the mirror or removes the mirror from the instrument, a service call is needed to realign the instrument. In a sample compartment of the spectrometer, there is a possibility of a leak or spill that could contaminate or damage a mirror, and also the possibility of scratching a mirror during cleaning. In such cases a new mirror must be installed and realigned, and a skilled technician must be called to install and align the replacement mirror.

Vibrations occurring in process plant or industrial applications and also in the shipping of the spectrometer can result in misalignment of the mirrors which require realignment. Potential glue bond failure could cause the mirror substrate to break away from its mount.

In many prior mirror designs, a mix of materials is used, for example aluminum castings, glass or metal substrates, adhesives, and steel adjustment screws. The different coefficients of thermal expansion of these materials in contact with one another can create a stability problem in the mirror which affects the alignments of the mirrors over time.

In most prior mirror mounting systems for spectrometers, the initial placement of the mirrors in the chassis loosely located the mirrors subject to later fine adjustment. Generally, there was no direct relationship between the vertices of the mirrors and an exact desired location of the mirrors within the spectrometer.

### SUMMARY OF THE INVENTION

In accordance with the present invention, a mirror system is provided for optical systems such as infrared spectrometers which allows precise, simple and repeatable mounting of mirrors in desired locations within the spectrometer with virtually no alignment or adjustment required to set up the spectrometer. The optical system includes a base, which may be formed as a solid baseplate, having a top surface which defines a reference plane. Reference locators, such as holes or pins, are provided in the base to locate the desired position of the mirrors. In particular, each of the reference locators on the baseplate defines a line perpendicular to the surface of the baseplate reference plane which lies at the desired surface vertex of one of the mirrors in the system. These mirror surface vertices lie at intersections of the centerlines of the beampaths in the instrument. Consequently, all of the focal points and beam paths of the system are determined with reference to the reference locators on the baseplate.

Each of the mirrors has a reference locator on its bottom surface which aligns and interlocks with one of the reference locators in the baseplate. The reference locators, for example, may comprise a pin, a hole suited to receive a pin, or a hole with a pin in it. Each focusing mirror is formed such that the reference locator in the mirror body lies on a line which intersects the mirror surface on the mirror body at a position which is at the surface vertex of the mirror. Consequently, when the reference locator on the mirror body is aligned and interlocked with the reference locator on the base, the position of the surface vertex of the mirror is determined, thereby constraining the focal point of the mirror to lie on an arc of a circle which is a fixed radius around the line of the reference locator.

An alignment locator, such as a pin or hole, is formed in the mirror body at a position spaced from the reference locator and is aligned and interlocked with a corresponding (hole or pin) alignment locator in the baseplate to fix the angular orientation of the mirror on the baseplate and thereby fix the position of the focal point of the mirror in space. For example, for a mirror unit having a mirror surface which forms part of a paraboloid of revolution which has an optical axis (its axis of symmetry), a collimated beam projected in space in parallel with the optical axis will, upon striking the mirror surface, be focused by the mirror to the focal point of the mirror at a point in space which has been precisely located. No further adjustment of the vertical or rotational position of the mirror is required to accurately locate the focal point. Moreover, the height of the center line of the incident beam which the mirror focuses is precisely determined by the height of the point of intersection of the projected centerline of the reference locator with the mirror surface, which is the height of that point on the mirror above the baseplate.

In a preferred process of manufacturing the mirrors in accordance with the invention, each mirror surface is machined on a face of a unitary mirror body formed of a machinable material, such as aluminum, and is machined relative to the reference and alignment locators on the bottom surface of the mirror body. The machining is preferably done so that an imaginary center line of the reference locator projected through the mirror body will intersect the surface vertex of the surface that is machined into the face of the mirror body, while the alignment locator maintains the correct angular relationship of the mirror surface. Appropriate mirror surfaces may be machined into metal mirror bodies by diamond turning machining or highly accurate numerically controlled turning processes, or may be replicated into substrates by replication techniques.

The optical system of the invention thus provides mirrors which, when installed, are accurately located and are non-adjustable so that further adjustments are neither necessary nor desired. Each mirror is preferably formed as a one piece unit, eliminating any assembly processes. Because the mirrors are formed in one piece, they exhibit homogeneous thermal stability since no dissimilar materials are in contact with one another. Furthermore, the baseplate itself is preferably formed of a material comparable to or even identical to the material of the mirrors (e.g., cast aluminum), so that both the baseplate and the mirrors have identical thermal expansion characteristics. The mirror bodies themselves preferably are relatively thick compared to the depth of cut of the mirror formed integrally into the body to provide a robust mirror structure which is mechanically strong, relatively insensitive to thermal changes, and resistant to vibration. Because the mirrors are precisely located by the reference locators and alignment locators on the mirrors which align and interlock with corresponding locators on the baseplate, the mirrors are easily replaced in the field without the need for a trained technician. A replacement mirror will automatically be in proper alignment because it will have been machined so that its mirror surface matches the mirror surface of the mirror to be replaced, and the reference locator and the alignment locator are at the same position on the replacement mirror as on the original mirror. Thus, no realignment of the replaced mirror or other mirrors in the system is required. Assembly time is substantially reduced, both in the factory and at the job site, and alignment both in the factory and at a user's site is eliminated. The performance of the optical system is thus less dependent upon the skill level of technicians in aligning the mirrors as in conventional optical systems.

Because of the direct relationship between the surface vertices of the mirror surfaces and the centerlines of the reference locators, a technician can place alignment posts in the positions that the surface vertices of the mirrors will occupy, allowing a quick optical baseplate quality control alignment check without having the mirrors in position.

The mirrors of the present invention are preferably formed from a unitary, integral blank which may be of standard size. Such blanks can be fabricated so that both parabolic and flat mirrors may be formed in the faces of the blank, and are preferably sized so that the surface vertex of each (e.g., parabolic) mirror, over the entire anticipated range of shapes of the mirrors to be used in the optical system, will nonetheless lie on a centerline extending from the reference locator. Furthermore, flat mirrors are preferably formed so that the mirror surface defines a plane in which a centerline extending from the reference locator lies. In this manner, even flat mirrors which are used to redirect the collimated beam or change the beam direction along an axis will be precisely located in their desired positions by action of the reference locators and the alignment locators.

Further objects, features and advantages of the invention will be apparent from the following detailed description when taken in conjunction with the accompanying drawings.

### BRIEF DESCRIPTION OF THE DRAWINGS

In the drawings:

Fig. 1 is a schematic plan view of an exemplary optical system for an infrared spectrometer in accordance with the present invention showing an illustrative sampling attachment mounted thereto.

Fig. 2 is a plan view of the baseplate of the optical system of Fig. 1.

Fig. 3 is a side view of the baseplate of Fig. 2.

Fig. 4 is a perspective view of an illustrative unitary mirror formed in accordance with the present invention.

Fig. 5 is a top view of the mirror of Fig. 4.

Fig. 6 is a front view of the mirror of Fig. 4.

Fig. 7 is a bottom view of the mirror of Fig. 4.

Fig. 8 is a cross-sectional view of the mirror of Fig. 4 taken generally along the lines 8-8 of Fig. 5.

Fig. 9 is a schematic plan view illustrating the relationship between the mirror surface formed on a mirror in accordance with the invention and the incident and reflected beams.

Fig. 10 is a front view of the illustrative mirror of Fig. 9.

Fig. 11 is a bottom view of the mirror of Fig. 9.

Fig. 12 is a schematic top view of a flat faced mirror formed in accordance with the present invention showing the relationship between the incident and reflected beams.

Fig. 13 is a side view of the flat mirror of Fig. 12.

Fig. 14 is a front view of the flat mirror of Fig. 12.

Fig. 15 is a bottom view of the flat mirror of Fig. 12.

Fig. 16 is a top view of a universal mirror blank formed in accordance with the present invention.

Fig. 17 is a front view of the blank of Fig. 16.

Fig. 18 is a bottom view of the blank of Fig. 16.

Fig. 19 is a perspective view of an illustrative convex mirror in accordance with the present invention.

### DETAILED DESCRIPTION OF THE INVENTION

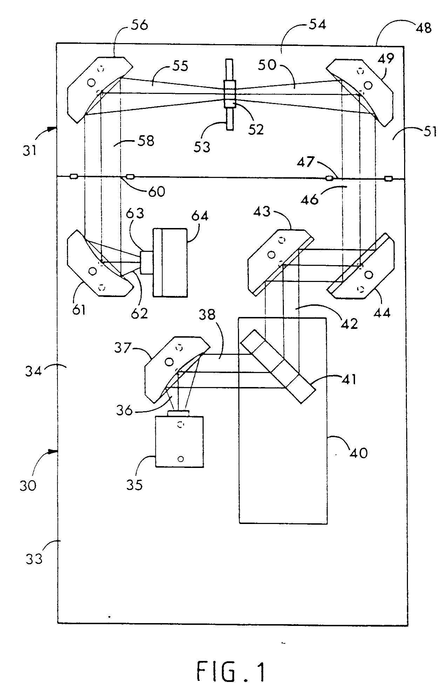

With reference to the drawings, a schematic plan view of a spectrometer incorporating the invention is shown generally at 30 in Fig. 1 with an exemplary sample accessory unit 31 mounted adjacent thereto. The optical system of the present invention may be configured in various ways which are conventional in infrared spectrometers, particularly Fourier transform infrared spectrometers, as well as in other optical systems, and the optical layouts to be described below are for illustrative purposes only. It will be apparent to those skilled in the art that various other configurations can be utilized.

The spectrometer 30 has a baseplate 33 with a flat top surface 34 which defines a reference plane for the optical components of the system. These optical components include an infrared source 35. The source 35 may be of any type of infrared source that provides a beam of infrared 36 of the desired wavelengths, which typically is a diverging beam as illustrated. This diverging beam 36 is intercepted by a collimating mirror 37 which redirects a collimated beam 38 to an interferometer 40 which has a beamsplitter 41. The interferometer 40 provides a modulated output beam 42. The manner of operation and purpose of the interferometer 40 are well known, and the interferometer may be a Michelson type interferometer. Examples of Fourier transform infrared (FTIR) spectrometer systems are shown in U.S. Patents Nos. 4,799,001 and 4,847,878 which are incorporated herein by reference.

The collimated output beam 42 of the interferometer 40 is intercepted by a flat faced mirror 43 which redirects the beam toward another flat faced mirror 44 which provides a collimated exit beam 46. The flat faced mirrors 43 and 44 are commonly used in spectrometers to change the direction of a collimated beam or to displace the beam to a preferred location. For example, as illustrated in Fig. 1, the beam 46 is displaced laterally from the exit beam 42 of the interferometer so that the beam 46 can pass through a window 47 to enter the accessory compartment 48 of the accessory unit 31. Within the accessory compartment, the beam 46 is intercepted by a focusing mirror 49 which provides a focused beam 50 that impinges on a sample 52 held in a sample holder 53. The diverging beam 55 which is passed through the sample is intercepted by a collimating mirror 56 which provides a collimated output beam 58 which passes through a window 60 back into the spectrometer 30. The collimated beam 58 within the spectrometer is intercepted by a focusing mirror 61 which focuses the reflected beam 62 onto a detector target area 63 of an infrared detector system 64.

The foregoing described spectrometer system is set forth for illustrative purposes only, it being understood that many other layouts for spectrometers, and for sample accessory compartments, may be utilized with the mirror system of the present invention.

As described further below, the mirrors 37, 43, 44 and 61 within the spectrometer 30 are mounted to the baseplate 33 at precisely defined positions. The top surface 34 of the baseplate 33 defines a reference plane with respect to which each of the mirror surfaces on the mirrors 37, 43, 44 and 61 are referenced. The construction of the mirrors and their mounting to the baseplate is described in further detail below. Preferably, the accessory compartment 31 also has a baseplate 51 which has a top surface defining a reference plane onto which the mirrors 49 and 56 and the sample holder 53 are mounted. Preferably, the top surface 54 of the baseplate 51 of the accessory is coplanar with the top surface 34 of the spectrometer baseplate 33. By locating the baseplates 51 and 33 coplanar with each other, and in a fixed, preferably abutting relationship with one another, the positions of the accessory mirrors 49 and 56 can also be precisely determined with respect to the mirrors within the spectrometer 30.

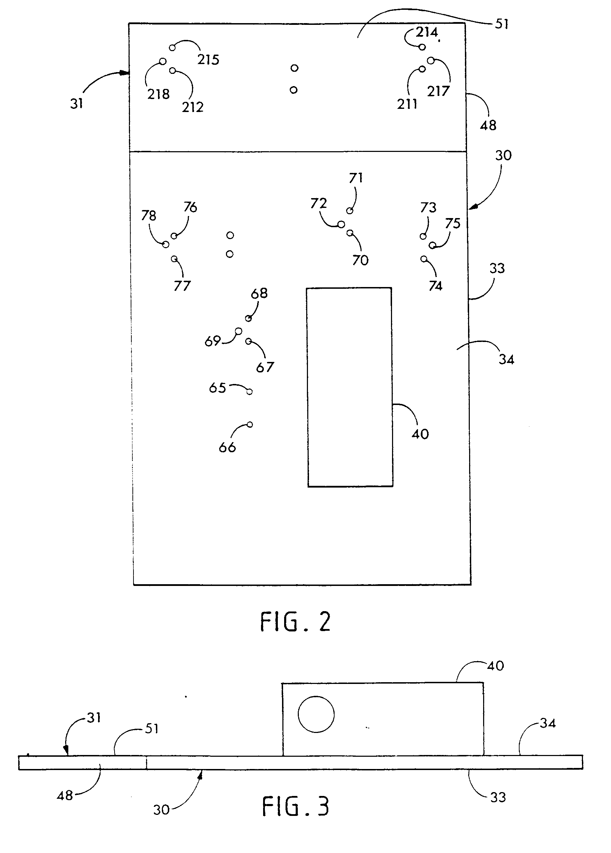

An exemplary baseplate 33 for the spectrometer is shown in Figs. 2 and 3. As illustrated therein, the baseplate is preferably a relatively thick unit formed integrally of a material which is both mechanically and thermally stable. For example, relatively thick cast aluminum may be utilized to form the baseplate, and will be advantageous where the mirrors 37, 43, 44 and 61 mounted on the baseplate are also formed of aluminum since the baseplate and the mirror units will then have similar coefficients of thermal expansion. By having a relatively thick and mechanically robust baseplate, the surface 34 thereof may be machined flat to define a precise reference plane and this plane will remain dimensionally stable when the various components of the spectrometer are mounted thereon.

As illustrated particularly in the plan view of Fig. 2, the surface of the baseplate has a number of holes formed therein. These holes include a reference locator hole 65 and a threaded securement hole 66 for locating and securing the source 35 into position. A reference locator hole 67, alignment locator hole 68, and threaded securement hole 69 are provided for locating and securing the mirror 37. A reference locator hole 70, alignment locator hole 71 and threaded securement hole 72 are used to locate and secure the mirror 43. A reference locator hole 73, alignment locator hole 74, and threaded securement hole 75 are used to locate and secure the mirror 44. A reference locator hole 76, alignment locator hole 77, and threaded securement hole 78 are used to locate and secure the mirror 71. The reference locator holes 67, 70, 73 and 76 are formed in the baseplate 73 to each lie directly underneath (at their centerlines) the surface vertex of the mirror which is located by that hole, and thus provide a means for defining the centerline of a desired beampath through the optical system at the points where the beampath changes direction through. the system. The alignment locator holes 68, 71, 74 and 77 define the alignment of the incident and reflected beams from each mirror which is aligned by that hole. Consequently, the various reference locator holes and alignment locator holes precisely define the desired beam paths and focal points of incident and reflected beams from each of the mirrors that these holes locate. It is understood that the reference locator holes and alignment locator holes may conversely be pins which extend upwardly beyond the surface of the baseplate, or other appropriate structures, which nonetheless serve the same function to define vertical lines (perpendicular to the baseplate surface) which determine the positions at which the mirrors are to be fixed. Similar reference locator holes 211, 212, alignment locator holes 214, 215, and securement holes 217, 218 may be formed in the accessory baseplate 48, and it is apparent that the present invention may be used in various optical systems which require precise beam paths.

The interferometer 40 and detector unit 64 also are mounted to the baseplate 34. The interferometer can be prealigned and also pinned in place in a manner similar to the mirrors, or it can be adjusted and aligned after mounting on the baseplate 33 to place it into proper position with respect to the reference and alignment locator holes on the baseplate. The detector unit 64 may be mounted to the baseplate in various ways and constructed, if desired, to allow adjustment of the position of the detector after mounting.

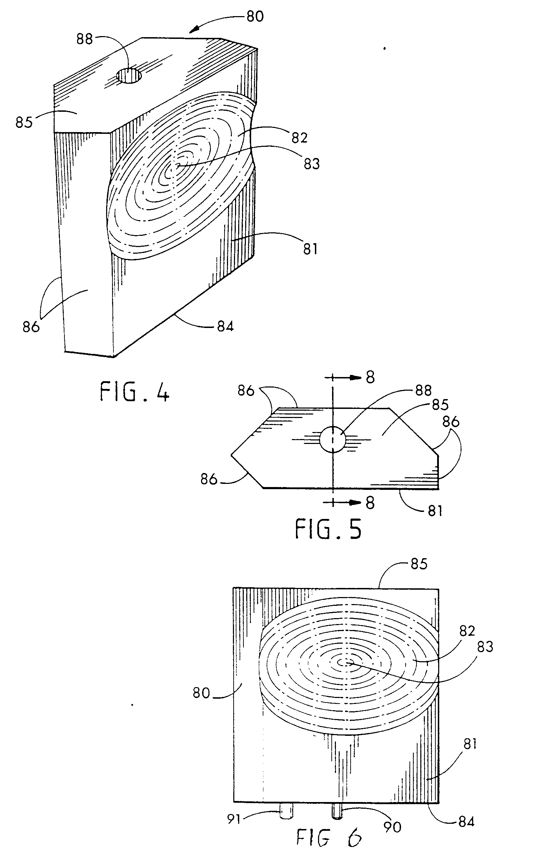

An exemplary unitary focusing mirror 80 in accordance with the present invention is shown in Figs. 4-8. The body of the unitary mirror 80 is formed of a solid block of material, such as aluminum, and has a front face 81, a concave mirror reflective surface 82 machined into the front of the mirror body, a surface vertex 83 (described further below) of the mirror surface 82, a bottom surface 84, a top 85, and sides 86. A hole 88 is formed vertically through the mirror body from the top surface to the bottom surface to allow securement of the mirror to the baseplate with a bolt (not shown) which fits through the hole 88 and can thread into one of the securement holes in the baseplate.

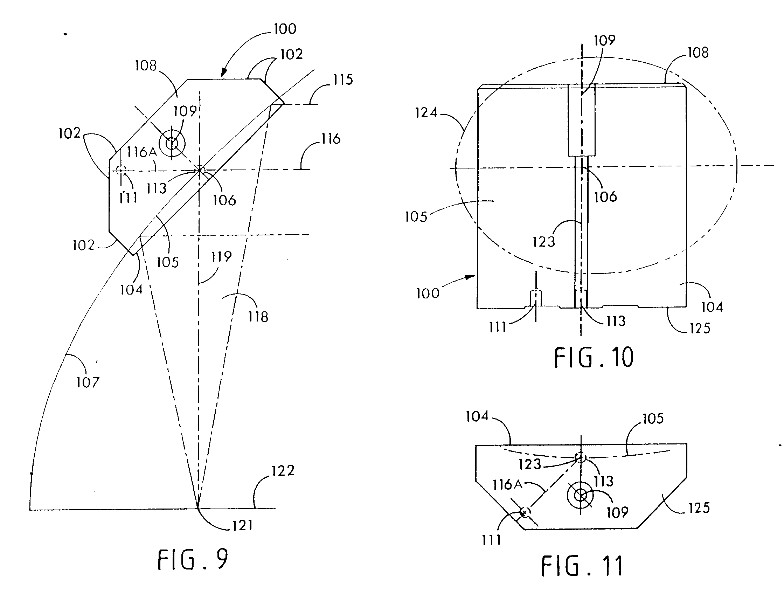

Extending from the bottom registration surface 84 are a reference locator pin 90 and an alignment locator pin 91. The pins 90 and 91 generally are formed perpendicular to the bottom registration surface 84 and are preferably embedded in reference locator and alignment locator holes, respectively, in the mirror body. As best illustrated in Fig. 8, the reference locator pin 90 is centered on an imaginary line 96 which extends vertically upward and is tangential to the mirror surface 82 at the surface vertex point 83. Specifically, the reference locator pin 90 is formed directly vertically beneath the surface vertex 83 in the mirror 80, which is generally the point of maximum depth of the concave mirror surface, and thus provides a means for locating a position on the bottom surface of the mirror which is directly beneath the surface vertex. The mirror surface 82 may be formed by a diamond turning machining process. In machining the mirror 80, the reference locator pin 90 is used during the machining process to locate the mirror for machining (e.g., diamond turning) and the surface vertex 83 of the mirror is machined so as to intersect a line 96 extending from the center of the pin 90. The machining process is also carried out with reference to the alignment locator pin 91 so the mirror surface 82 (for example, a portion of a paraboloid of revolution) is properly oriented in space. The alignment locator pin provides a means for locating a position on the bottom surface which is spaced from the reference locator means to thereby allow the alignment of the mirror to be determined.

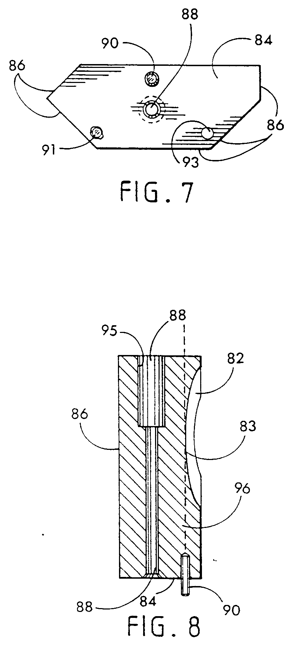

The mirror 80 may be mounted using the holes formed in the baseplate 33, with the reference locator pin 90 aligning with and fitting into a reference locator hole on the baseplate and the alignment locator pin 91 aligning with and fitting into an alignment locator hole in the baseplate to interlock the mirror to the baseplate. Of course, the particular mirror surface 82 formed in the mirror will be specified for the particular location of the mirror on the baseplate. As an example, the mirror 80 shown in Figs. 4-8 may be utilized as the focusing mirror 61 shown in Fig. 1, with the reference locator pin 90 fitting in the reference locator hole 76, the alignment locator pin 91 fitting in the alignment locator hole 77, and with the vertical hole 88 located over the threaded hole 78 in the baseplate. A threaded bolt (not shown) or other appropriate fastener may then be inserted into the widened top end 95 of the hole 88 and passed down through the bore of the hole 88 and threaded into the hole 78 in the baseplate to tightly secure the mirror 80 into position on the baseplate. However, the locator pins 90 and 91 serve the primary function of locating the mirror surface 82 in space with respect to the baseplate and interlocking the mirror to the baseplate in that position. The pins 90 and 91 preferably have vertically oriented surfaces which are substantially parallel to one another. When these pins are fitted into the locator holes 76 and 77, which are sized to firmly engage the pins 90 and 91, the orientation of the mirror 80 in space with respect to the reference plane 34 will also be determined. Alternatively, the flat bottom register surface 84 of the mirror, in engaging the flat reference surface 34 of the baseplate, may also be utilized to align the mirror surface 82 in space with respect to the plane 34 of the baseplate. Preferably, the pins 90 and 91 have vertical surfaces which are essentially perpendicular to the register surface 84 so that when the pins 90 and 91 are fully inserted in the holes in the baseplate, the bottom register surface makes firm contact with the surface 34 of the baseplate. The alignment locator pin 91 is preferably a "diamond" pin, as best illustrated in Fig. 7, having two flatter sides and two relatively narrow edges, between the flatter sides, which define the maximum width of the pin. In other words, the pin has a narrow dimension between its flatter sides and a broad dimension between the edges. The diamond pin 91 is preferably fixed in position in the mirror body with one of the flatter sides facing the reference locator pin 90 and a line between the two edges lying perpendicular to a line between the pins 90 and 91. The dimension between the wide edges of the diamond pin 91 is selected so that the edges fit fairly snugly in an alignment locator hole in the baseplate. Since these edges are on a line perpendicular to a line to the reference locator pin, the close engagement of the edges of the pin 91 to the alignment locator hole in the baseplate accurately locates the rotational position of the mirror about the reference locator pin. However, if there is a slight discrepency in the distance between the centers of the reference and alignment locator pins on the mirror and the reference and alignment locator holes in the baseplate, the flat sided diamond pin 91 can seat itself in the alignment locator hole either slightly closer to or further away from the reference locator pin 90. Another way to accomodate dimensional discrepencies is to form a slot rather than a hole as the alignment locator in the baseplate. The long dimension of the slot extends on a line toward the reference locator hole. The width of the slot is selected to closely match the width of the alignment locator pin, thereby holding the alignment locator pin firmly to prevent rotation of the mirror about the reference locator but allowing any discrepancies in spacing between the pins on the mirror and the holes in the baseplate to be accommodated.

A top view of an exemplary mirror unit 100 illustrating the relationship between the incident and reflected beams is shown in Fig. 9. The mirror unit 100 as shown in Fig. 9 may be formed as described above, having sides 102, a front face 104, and a mirror surface 105 which is machined into the body of the mirror. The surface vertex 106 lies on the concave surface 105 of the mirror which forms a portion of an imaginary paraboloid of revolution indicated by the line 107. The mirror unit 100 also has a top 108, a vertical hole 109 formed therein for securing the mirror to a baseplate, an alignment locator hole 111, a reference locator hole 113 (located beneath the surface vertex 106) and a bottom surface 125. For illustrative purposes, an incoming collimated beam is shown by the lines labelled 115 in Fig. 9. The center of the beam 115 is illustrated by the center line 116 in Fig. 9. The orientation of the beam 115 in space and the positioning of the mirror 100 are such that the center line 116 preferably intersects the surface vertex 106 (which lies above the reference locator hole 113). Preferably, an extension of the beam center line 116, as illustrated at 116A, extends over the center of the alignment hole 111. The incident beam 115 is reflected from the mirror surface 105 to form a reflected beam 118, having a center line 119, which converges on a focal point 121 which lies on the optical axis 122 of the paraboloid of revolution 107. The point 121 is the focal point of the paraboloid of revolution 107. The center line 119 of the reflected beam also passes directly through the surface vertex 106 and directly over the center 123 of the reference locator hole 113. Where a pin (not shown) is inserted in the reference locator hole 113, the pin may then be inserted in the corresponding reference locator hole in the baseplate to thereby locate the mirror 100 on the baseplate and fix the focal point 121 as lying somewhere on an arc of a circle of constant radius around the surface vertex 106. A pin (not shown, but preferably a "diamond" pin as described above) inserted in the alignment locator hole 111 and in a corresponding alignment locator hole in the baseplate fixes the orientation of the mirror 100 with respect to the baseplate, so that the focal point 121 is thus fixed at a particular point in space above the baseplate given an incident beam 115 having a center line 116 which is incident upon the surface vertex 106. In this manner, if the desired location of the incident beam 115 with respect to the baseplate is known, and the desired position of the focal point 121 above the baseplate is known, the reference locator holes and the alignment locator holes in the baseplate can be properly positioned so that when the mirror 100 is fixed to the baseplate with the reference locator located at a reference locating position on the baseplate, and the alignment locator located at an alignment locating position on the baseplate, the desired conditions for locating the focal point will be met.

As used herein, the surface vertex point 106 of a mirror surface forming a segment of a paraboloid of revolution is defined as the intersection of the reflected beam center line 119 (or more generally, a plane including the line 119) which passes through the focal point 121 (located on the optical axis 122, the axis about which the paraboloid of revolution is symmetrical), with the paraboloid of revolution at the position at which the center line 116 of the incident beam intersects the mirror surface 105 (a portion of the paraboloid of revolution being machined into the mirror body). Generally, the surface vertex will be at the intersection of the center lines of the incident and reflected beams, and will usually be at the point of maximum depth of a concave mirror surface. The alignment locator pin or hole 111 may also lie under the center line of the incident beam, or under the center line of the reflected beam, either one of which will properly locate the mirror in rotational position around the reference locator 113. However, the alignment locator pin or hole may be formed at other positions in the mirror body which are spaced from the reference locator hole.

As shown for illustrative purposes in Fig. 10, the machining of the portion of the paraboloid of revolution 107 into the body of the mirror 100 (which portion can be termed the "off axis" segment) removes that part of the mirror body which lies below an imaginary line 124 at which the plane of the face 104 intersects the paraboloid of revolution 107.

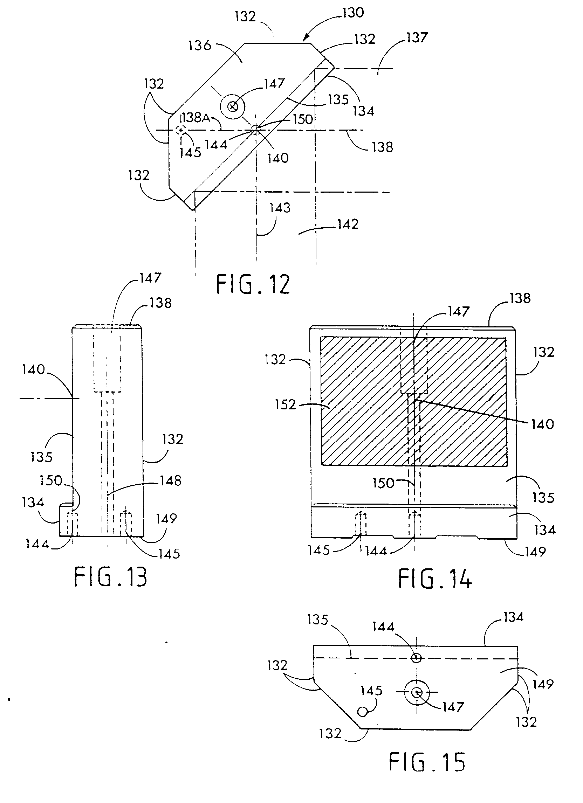

As noted above, flat mirrors are utilized to redirect collimated beams within spectrometer systems. An exemplary flat mirror in accordance with the present invention is shown at 130 in Figs. 12-15. The mirror 130 has a solid, unitary mirror body with upright sides 132, a front face portion 134, a planar mirror surface 135 machined into the front of the mirror body, and a top 136. For purposes of illustration, a collimated incident beam 137, having a center line 138, is shown in Fig. 12 incident on the mirror surface 135 at approximately a 45° angle to the mirror surface, resulting in a reflected collimated beam 142, having a center line 143, which is perpendicular to the incident beam 137. The center lines 138 of the incident beam and 143 of the reflected beam intersect at a point 140 which may be considered the surface vertex of the plane mirror. A reference locator hole 144 is formed directly beneath the surface vertex 140, and an alignment locator hole 145 is formed at a position spaced away from the hole 144 preferably lying directly under an extension 138A of the center line 138. It should be understood that the alignment locator hole 145 could also be formed at a position spaced from the reference locator hole 144 at a position directly under an extension of the center line 143. Indeed, the alignment locator hole 145 may be formed at other positions spaced away from the reference locator hole 144 provided that the relationship between the holes 144 and 145 is precisely known. A vertical hole 147 is formed entirely through the body of the mirror to allow a bolt to be passed therethrough to be threaded into a threaded hole in the baseplate to secure the mirror in position on the baseplate.

As illustrated in Figs. 14 and 15, the mirror 130 also has a flat bottom surface 149 which is adapted to rest on the flat surface of the baseplate.

The mirror 130 of Figs. 12-15 may be utilized as the flat deflecting mirrors 43 and 44 of Fig. 1. Because the reference locator 144 of the flat mirror is precisely located directly beneath the mirror surface at the center of the mirror surface 135 (that is, beneath the point 140 chosen as the surface vertex), the manner in which such flat mirrors will deflect collimated beams is precisely determined when the mirrors are inserted in place on the baseplate with pins in the reference locator holes and the alignment locator holes in both the mirror and the baseplate. As is apparent from Fig. 1, the reference locator holes for these mirrors will lie directly under the desired center lines of the incident and reflected beams. As noted above, this is also the case for the reference locator holes which lie under the intersection of the center lines of the incident and reflected beams for the focusing mirrors.

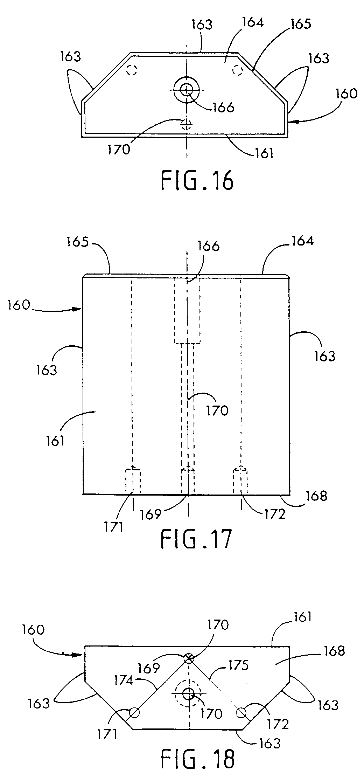

All of the mirrors, both focusing mirrors and planar mirrors, may be formed from a universal mirror blank. An exemplary universal mirror blank in accordance with the present invention is shown at 160 in Figs. 16-18. The universal mirror blank 160 is formed of a solid body of material, e.g., aluminum, and has a flat upright front face 161 and upright sides 163. The particular form and shape of the sides 163 is not important to the present invention, and there is no particular relationship between the mirror surfaces to be formed in the mirror blank 160 and any of the sides 163 or any point on the sides. The mirror blank has a substantially flat top 164 with a chamfer 165 preferably formed around the top edges of the top 164 to avoid sharp top edges, in part for convenience in handling. A vertical hole 166 is formed entirely through the blank to allow a bolt to be inserted therein, and an expanded top opening 167 is preferably formed around the hole 166 to admit the head of an attachment bolt so that when the bolt is inserted in the hole 166 the head of the bolt will not extend above the top surface 164 of the finished mirror.

The blank also has a flat bottom surface 168 which is substantially perpendicular to the front face 161. A reference locator hole 169 is formed in the bottom of the blank at a position spaced inwardly from the front face 161 by a pre-selected distance. The cylindrical walls of the reference locator hole 169 are preferably substantially parallel to the front face 161 and substantially perpendicular to the flat bottom surface 168. The reference locator hole 169 will be located with its center lying on an imaginary line 170 which will, when a mirror is formed from the blank 160, intersect the surface vertex of a focusing mirror or lie in the plane of a planar mirror. The distance that the reference locator hole is spaced from the front surface 161 is selected based on the anticipated deepest point of machining that will be required to form the most concave (or convex) mirror required in the spectrometer system. That is to say, the center line 170 must be sufficiently spaced from the front surface 161 so that when the concave surface of the most concave mirror is machined into the face 161 of the blank 160, the machined mirror surface area will intercept substantially all of the incident beam, which generally will have a width which will be substantially the width of the front face 161. Less concave mirror surfaces, in particular, flat mirrors, would not have to be machined down to have their deepest point at the line 170. However, it is intended in the present invention that each of the mirrors be machined so that their surface vertices (or the equivalent for flat mirrors) lie on the imaginary line 170 which extends up from the center of the reference locator hole 169.

Two alignment locator holes 171 and 172 are also formed in the bottom 168 of the blank 160. These holes are illustratively shown as spaced the same distance from the reference locator hole 169, symmetric about the line 170, and lying along lines that are at a right angle to each other, as illustrated by the line 174 between the reference locator hole 169 and the alignment locator hole 171, and the line 175 between the reference locator hole 169 and the alignment locator hole 172. When the reference locator hole 169 is aligned with a reference locator hole in the baseplate, and one of the alignment locator holes 171 or 172 is aligned with a corresponding alignment locator hole in the baseplate, a mirror machined from the blank 160 will be precisely located at a position which will be oriented 45° to the incident and reflected beams, which will be at 90° to each other. If desired, the mirrors may be designed so that the incident and reflected beams are not at 90° angles to one another. However, it is preferred in the present invention to use 90° incident and reflected beams, and the mirror blank 160 is particularly suited to such a standardized system which reflects a beam at a 90° angle.

In the present invention, a reference locator hole in a mirror may be aligned and interlocked with a reference locator hole in the baseplate by a pin which tightly fits in both the mirror hole and the baseplate hole. Similarly, the alignment locator hole in the mirror is aligned and interlocked with an alignment locator hole in the baseplate by a pin which fits tightly in both holes. It is apparent that either the baseplate or the mirror may have pins permanently in place in the reference locator and alignment locator holes. Generally, for ease of handling, it is preferred that the pins be placed within the holes in the mirrors rather than in the baseplate. The pins are preferably formed of a hardened metal and can be secured in the hole with a small amount of glue, such as epoxy, to prevent the pins from being removed. Alternatively, the pins can be permanently embedded in the baseplate, or be integrally formed with the mirrors or the baseplate. It is also understood that other mechanisms may be utilized to align and interlock an alignment locator and a reference locator on the mirror with an alignment locator and a reference locator on the baseplate.

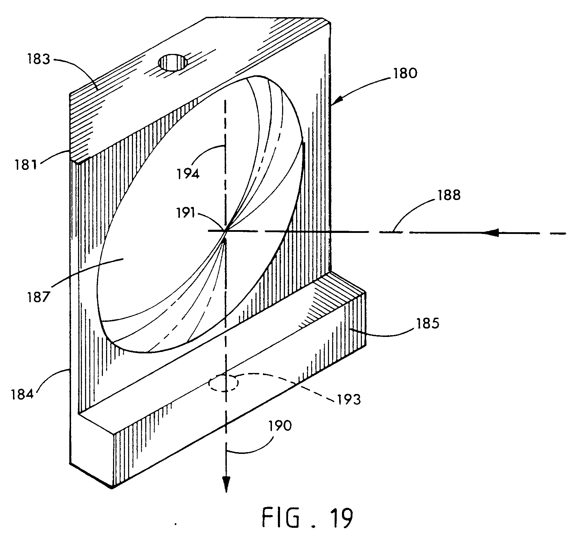

An exemplary convex mirror formed according to the principles of the present invention is shown at 180 in Fig. 19. The convex mirror 180 has a mirror body 181, preferably formed from the unitary blank 160, a top 183, upright sides 184, a front face 185, and a flat bottom registration surface (not shown in Fig. 19). A convex mirror surface 187 is machined into the front of the mirror body and may form, for example, a portion of a sphere or a paraboloid of revolution. An incident beam having a centerline 188 is reflected by the mirror to form a reflected beam having a centerline 190. The centerlines 188 and 190 intersect at a point 191 which is the surface vertex of the convex mirror surface 187. The surface vertex is generally the outermost point on the convex surface 187. A reference locator hole 193, shown in dashed lines in Fig. 19, is located directly beneath the surface vertex 191 at the center of an imaginary line 194 which is tangent to the mirror surface 187 at the surface vertex 191. A pin (not shown) may be mounted in the reference locator hole, as described above with respect to the concave and flat mirrors. An alignment locator (not shown) is also preferably formed in the bottom surface of the mirror body in the manner described above.

The mirror blanks may be formed of various materials which are capable of being machined, with aluminum being a preferred material. If desired, the machined mirror surfaces may be coated with conventional coating material, e.g., gold or silver, for specific applications. Other metals, plastics, and so forth may also be utilized. Where machining capabilities are available, glass and crystalline materials may be utilized to form the blanks. In appropriate cases, mirrors may be made by molding processes using a machined mirror as a master. Mirrors of the present invention may also be made by well known replication processes. In an exemplary process, a master is coated with a release layer and then a mirror coating. A mirror body is machined to substantially the final mirror configuration except for optical accuracy and finish. An adhesive such as epoxy is applied to the mirror body and the mirror coating on the master is bonded to it. After the adhesive is cured, the master and the replicated mirror are separated at the release layer to leave the mirror surface on the replica. The master may then be used to make additional replicas. As used herein a mirror formed with a separate mirror surface adhered in fixed position on the mirror is a one piece mirror as completed. A one piece mirror has a mirror surface which is fixed in position with respect to the reference and alignment locators.

It is understood that the invention is not confined to the particular embodiments set forth herein as illustrative, but embraces such modified forms thereof as come within the scope of the following claims.

## Claims

1. A focusing mirror for an optical system such as an infrared spectrometer comprising:
(a) a one-piece mirror body having a bottom surface, sides, a top and a front face;
(b) a concave mirror surface formed in the mirror body at the front face of the mirror body which extends inwardly and has a point of maximum depth defining the surface vertex of the mirror;
(c) reference locator means on the mirror body for locating a position on the bottom surface directly beneath the surface vertex, and alignment locator means on the mirror body for locating a position on the bottom surface which is spaced from the reference locator means.

2. An optical mirror mounting system comprising:
(a) a baseplate having a flat top surface forming a reference surface, a plurality of reference locator positions formed in the baseplate at spaced positions in the baseplate, each reference locator position lying under the centre line of a desired beampath through the optical system at the points where the beampath changes direction through the system, and further including an alignment locator position associated with each reference locator position and spaced therefrom a standard distance;
(b) at least one focusing mirror mounted to the baseplate, the focusing mirror comprising:
(i) a one-piece mirror body having a bottom surface, sides, a top and a front face;
(ii) a concave mirror surface formed in the mirror body at the front face of the mirror body which extends inwardly from the front face to a point defining the surface vertex of the mirror; and
(iii) reference locator means on the mirror body for locating a position on the bottom surface directly beneath the surface vertex, and alignment locator means on the mirror body for locating a position on the bottom surface which is spaced from the reference locator means,
wherein the mirror is positioned on the baseplate such that the position located by the reference locator means is at a reference locator position in the baseplate and the position located by the alignment locator means is at an alignment locator position in the baseplate.

3. The optical system of claim 2, further including at least one deflecting mirror mounted to the baseplate, the deflecting mirror comprising:
(a) a one-piece mirror body having a bottom surface, sides, a top and a front face;
(b) a planar mirror surface formed in the mirror body at the front face of the mirror body and spaced inwardly from a portion of the front face of the mirror body which is adjacent to the bottom surface of the mirror body; and
(c) reference locator means on the mirror body for locating a position on the bottom surface directly beneath the plane of the mirror surface at substantially the centre of the mirror surface, and alignment locator means on the mirror body for locating a position on the bottom surface of the mirror body which is spaced from the reference locator means,
wherein the deflecting mirror is positioned on the baseplate such that the position located by the reference locator means is at a reference locator position in the baseplate and the position located by the alignment locator means is at an alignment locator position in the baseplate.

4. The optical system of claim 2 or 3, wherein the reference locator and alignment locator positions in the baseplate are defined by holes in the baseplate, and wherein the reference locator means and alignment locator means comprise pins extending, respectively, from the bottom surface of the mirror into a reference locator hole in the baseplate and from the bottom surface of the mirror into an alignment locator hole in the baseplate to fix the mirror in position.

5. The optical system of claim 4, wherein the pin extending from the mirror into the reference locator hole of the baseplate has a cylindrical shape with its sides extending perpendicular to the bottom surface of the mirror body.

6. The optical system of claim 4, wherein the pins extending from the mirror into the reference locator hole and the alignment locator hole in the baseplate each have surfaces which are perpendicular to the bottom surface of the mirror body.

7. The optical system of claim 2, 3, 4, 5 or 6, including a hole formed vertically through the mirror body from the top to the bottom surface thereof to allow a bolt to be passed therethrough for purposes of securing the mirror in position by being threaded into an underlying threaded hole in the baseplate.

8. The optical system of any one of claims 2 to 7, wherein there are a plurality of focusing mirrors mounted to the baseplate.

9. The optical system of claim 3 or any preceding claim depending therefrom, including a hole formed vertically through the deflecting mirror body from the top to the bottom surface to allow a bolt to be passed therethrough to secure the deflecting mirror to the baseplate.

10. A unitary mirror blank for forming a mirror for an optical system such as an infrared spectrometer comprising:
(a) a one-piece mirror body formed of metal having a bottom surface, sides, a top and a front face, the bottom surface and the front face being flat and perpendicular to each other;
(b) reference locator means on the mirror body for locating a position on the bottom surface a selected distance from the front face, and alignment locator means on the mirror body for locating a position on the bottom surface which is spaced from the reference locator means.

11. A mirror blank according to claim 10, including a hole formed vertically through the mirror body from the top to the bottom surface thereof to allow a bolt to be passed therethrough for purposes of securing a mirror formed from the blank in a desired position.

12. A mirror blank according to claim 10 or 11, further including a second alignment locator hole in the bottom surface of the mirror body spaced from the reference locator hole, the second alignment locator hole formed such that lines drawn between the first alignment locator hole and the reference locator hole and between the second alignment locator hole and the reference locator hole intersect at a right angle.

13. A mirror blank according to claim 10, 11 or 12, wherein the walls within the reference locator hole and alignment locator holes are cylindrical and are parallel to the front face and perpendicular to the bottom surface.

14. A convex mirror for an optical system such as an infrared spectrometer comprising:
(a) a one-piece mirror body having a bottom surface, sides, a top and a front face;
(b) a convex mirror surface formed in the mirror body at the front face of the mirror body which extends inwardly from the front face and has an outermost point defining the surface vertex of the mirror;
(c) reference locator means on the mirror body for locating a position on the bottom surface directly beneath the surface vertex, and alignment locator means on the mirror body for locating a position on the bottom surface which is spaced from the reference locator means.

15. A deflecting mirror for deflecting the direction of beams in an optical system such as an infrared spectrometer comprising:
(a) a one-piece mirror body having a bottom surface, sides, a top and a front face;
(b) a planar mirror surface formed in the mirror body at the front face of the mirror body and spaced inwardly from a portion of the front face of the mirror body which is adjacent to the bottom surface of the mirror body; and
(c) reference locator means on the mirror body for locating a position on the bottom surface directly beneath the plane of the mirror surface at substantially the centre of the mirror surface, and alignment locator means on the mirror body for locating a position on the bottom surface which is spaced from the reference locator means.

16. An infrared spectrometer optical system comprising:
(a) a baseplate having a flat top surface forming a reference surface, a plurality of reference locator positions formed in the baseplate at spaced positions in the baseplate, each reference locator position lying under the centre line of a desired beampath through the optical system at the points where the beampath changes direction through the system, and further including an alignment locator position associated with each reference locator position and spaced therefrom a standard distance;
(b) a plurality of focusing mirrors mounted to the baseplate, each focusing mirror comprising:
(i) a one-piece mirror body having a bottom surface, sides, a top and a front face;
(ii) a concave mirror surface formed in the mirror body at the front face of the mirror body which extends inwardly from the front face and has a point defining the surface vertex of the mirror, the mirror surface preferably forming part of a paraboloid of revolution; and
(iii) reference locator means on the mirror body for locating a position on the bottom surface directly beneath the surface vertex, and alignment locator means on the mirror body for locating a position on the bottom surface which is spaced from the reference locator means,
wherein each focusing mirror is positioned on the baseplate such that the position located by the reference locator means is at a reference locator position in the baseplate and the position located by the alignment locator means is located at an alignment locator position in the baseplate:
(c) an infrared source mounted to the baseplate;
(d) an infrared detector mounted to the baseplate;
(e) an infrared interferometer mounted to the baseplate; and
wherein the infrared source, infrared interferometer, infrared detector and mirrors are mounted on the baseplate arranged to direct infrared from the source in a beam through the interferometer to a sample chamber and to receive an infrared beam from a sample chamber and focus the beam on the detector.

17. The infrared spectrometer optical system of claim 16, including at least one deflecting mirror mounted to the baseplate, the deflecting mirror comprising:
(i) a one-piece mirror body having a bottom surface, sides, a top and a front face;
(ii) a planar mirror surface formed in the mirror body at the front face of the mirror body and spaced inwardly from a portion of the front face of the mirror body which is adjacent to the bottom surface of the mirror body; and
(iii) reference locator means on the mirror body for locating a position on the bottom surface directly beneath the plane of the mirror surface at substantially the centre of the mirror surface, and alignment locator means on the mirror body surface for locating a position on the bottom surface which is spaced from the reference locator means,
wherein the deflecting mirror is positioned on the baseplate such that the reference locator means locates the position on the bottom surface directly beneath the plane of the mirror surface at the centre of the mirror surface at a reference locator position in the baseplate and the position located by the alignment locator means is located at an alignment locator position in the baseplate.

18. The infrared spectrometer optical system of claim 17, wherein the reference locator and alignment locator positions in the baseplate are defined by holes in the baseplate and wherein the reference locator means and alignment locator means on the mirrors comprise pins extending from each mirror into a reference locator hole in the baseplate and from the mirror into an alignment locator hole in the baseplate to fix the mirror in position.

19. A focusing mirror, deflecting mirror, mirror blank, convex mirror or optical system according to any one of claims 1 to 17, wherein the reference locator means and the alignment locator means each comprise a hole formed in the bottom surface of the mirror body.

20. A focusing mirror, deflecting mirror, mirror blank, convex mirror or optical system according to any preceding claim, wherein the reference locator means comprises a cylindrical pin extending from the bottom surface and having sides which are perpendicular to the bottom surface of the mirror body.

21. A focusing mirror, deflecting mirror, mirror blank, convex mirror or optical system according to any preceding claim, wherein the reference locator means and the alignment locator means each comprise a pin extending from the bottom surface, the pins having surfaces which are perpendicular to the bottom surface of the mirror body.

22. A mirror or mirror blank or optical system according to any preceding claim, wherein the or each mirror body is integrally formed of metal and the mirror surface is formed therein by diamond turning machining with reference to the reference locator means.

23. A mirror or mirror blank or optical system according to any preceding claim, wherein the or each mirror body is integrally formed of aluminium.

24. The infrared spectrometer optical system of claim 17 or any preceding claim appendant thereto, including a hole formed vertically through each mirror body from the top surface to the bottom surface thereof to allow a bolt to be passed therethrough for purposes of securing the mirror in position by being threaded into an underlying threaded hole in the baseplate.

25. The mirror, optical system or block of any preceding claim, wherein the mirror surface forms a portion of a paraboloid of revolution.

26. The mirror, optical system or block of claim 25, wherein the paraboloid of revolution has an optical axis about which it is symmetrical and a focal point on the optical axis, and wherein the surface vertex of the mirror surface lies on a line through the focal point which is perpendicular to the optical axis.
